# EUROPÄISCHE PATENTSCHRIFT

(11) **EP 0 906 804 B1**
(45) Veröffentlichungstag und Bekanntmachung des Hinweises auf die Patenterteilung: **16.05.2001**
(21) Anmeldenummer: 98115209.3
(22) Anmeldetag: 13.08.1998
(51) Int. Cl.: B23K 26/00, B21D 26/02

(54) **Verfahren zum Herstellen eines Hohlkörpers aus zwei Metallplatinen**
Method for manufacturing a hollow body made of two plates
Procédé de fabrication d'un corps creux se composant de deux platines

(30) Priorität: 26.09.1997 DE 19742444
(43) Veröffentlichungstag der Anmeldung: 07.04.1999
(73) Patentinhaber: DaimlerChrysler AG, 70567 Stuttgart (DE)
(72) Erfinder: Thoms, Volker, Prof. Dr., 75365 Calw (DE); Pöllmann, Andreas, Dr., 71083 Herrenberg (DE)

(56) Entgegenhaltungen:
- DE-A- 19 535 870

## Beschreibung

Die Erfindung betrifft ein Verfahren zum Herstellen eines Hohlkörpers aus zwei Metallplatinen gemäß dem Oberbegriff des Patentanspruches 1.

Ein gattungsgemäßes Verfahren ist aus der DE 195 35 870 A1 bekannt. Dort werden zwei ebene Blechzuschnitte aufeinandergelegt und in einem Innenhochdruck-Umformwerkzeug zwischen dem Ober- und dem Unterwerkzeug eingespannt. Nach dem Schließen des Umformwerkzeuges wird ein Druckfluid unter Hochdruck in die Trennfuge geleitet, wonach sich die Zuschnitte (Platinen) aufweiten und an die Gravur des Umformwerkzeuges konturgerecht anlegen. In der Einspannung werden die Platinen nach der Aufweitung miteinander laserverschweißt. Anschließend wird das Druckfluid entspannt und aus dem Umformwerkzeug herausgeleitet, der Platinenverbund dem Umformwerkzeug entnommen und dann auf der der Aufweitung abgewandten Seite der Schweißnaht mittels eines Laser-Schneidwerkzeug besäumt. Der Druckfluideinleitbereich wird gleichfalls abgeschnitten. Der so erzeugte längliche Hohlkörper weist schließlich in seiner Endform an beiden Längsseiten einen an diesen entlang verlaufenden Flansch auf. Dieser ist für die weitere Verbauung bzw. Montage des Hohlkörpers beispielsweise als Teil einer Rahmenstruktur einer Kraftfahrzeugkarosserie im Sinne der Space-Frame-Technik aufgrund des zu erfordernden Bauraumes von großem Nachteil. Ein Abschneiden des Flansches ist wenig sinnvoll, da der Hohlkörpers anschließend in zwei dann aufwendig und unter Verlust der gewünschten Gesamtkontur verbindbare Halbschalen zerfällt, so daß die Herstellung eine flanschlosen Hohlkörpers nicht prozeßsicher vonstatten gehen kann.

Der Erfindung liegt die Aufgabe zugrunde, ein gattungsgemäßes Verfahren dahingehend weiterzubilden, daß aus zwei Metallplatinen ein flanschloser Hohlkörper in einfacher Weise prozeßsicher hergestellt werden kann.

Die Aufgabe ist erfindungsgemäß durch die Merkmale des Patentanspruches 1 gelöst.

Aufgrund der vorbereitenden Verfahrensschritte, bevor das Aufweiten des Platinenverbundes zu einem Hohlkörper erfolgt, und der alleinigen Einspannung des Verbundes im Druckfluideinleitungsbereich kann der übrige Teil des Verbundes ohne zwischen den Umformwerkzeughälften eingeklemmt zu werden in den Bereich innerhalb der Gravur positioniert werden. Dadurch wird eine Flanschbildung gezielt auf den Druckfluideinleitungsbereich gelegt, welcher ohnehin in einem Nachgang zur Aufweitung nach Entnahme des Hohlkörpers aus dem Umformwerkzeug vom Hohlkörper abgetrennt wird. Eine nachträgliche Abtrennung von anderen Flanschen zum Erhalt einer gewünschten Kontur des Hohlkörpers, durch die dieser verbaubar wird, und der dadurch bedingte Zerfall in mehrere Teile entfällt, so daß in einfacher Weise die prozeßsichere Herstellung eines flanschlosen Hohlkörpers gewährleistet ist. Die Aufweitung zum Hohlkörper erfolgt des weiteren prozeßsicher, da die im Resultat einer Durchschweißung der beiden Platinen strahlgeschweißte Naht eine derart hohe Qualität aufweist, daß die Naht auch bei hohen mechanischen Belastungen, insbesondere bei der beim Aufweiten der Platinen entstehenden Zugbelastung auch ohne Nachfließen von Material aus einem Einspannbereich haltbar bleibt. Durch den Entfall von einspannbedingten Flanschen - mit Ausnahme der bzw. des des Druckeinleitungsbereiches - kann auf eine aufwendige Steuerung der Zuhaltekraft des Umformwerkzeuges, die ein Nachfließen des Platinenmaterials in Richtung der Gravur in gewünschtem Maße gestattet, verzichtet werden. Weiterhin werden die mit einer umfänglich weitreichenden Einspannung der Platinen einhergehenden Dichtigkeitsprobleme für das Umformwerkzeug erheblich verringert.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einer perspektivischen Darstellung einen erfindungsgemäß zusammengeschweißten Platinenverbund aus zwei Platinen,
Fig. 2 den Platinenverbund aus Fig. 1 in einer Schnittdarstellung entlang der Linie II-II,
Fig. 3 den Ausschnitt des Platinenverbundes nach Fig. 2 nach dem Besäumen des Verbundes,
Fig. 4 in einem seitlichen Längsschnitt ein Innenhochdruck-Umformwerkzeug mit eingebrachtem verschweißten und besäumten Platinenverbund von Fig. 1 und 3 in Einspannlage,
Fig. 5 in einem Querschnitt die Einspannung des Platinenverbundes aus Fig. 4 mit in die Trennfuge der Platinen eingeschobenem Druckfluideinleitungsdorn,
Fig. 6 das Innenhochdruck-Umformwerkzeug von Fig. 4 mit eingebrachtem verschweißten und besäumten Platinenverbund von Fig. 1 und 3 in einem Querschnitt,
Fig. 7 ein nach dem erfindungsgemäßen Verfahren gefertigter durch Innenhochdruck kalibrierter Hohlkörper in einem Querschnitt,
Fig. 8 einen Ausschnitt des Hohlkörpers aus Fig. 7 in einem Querschnitt vor der Kalibrierung.

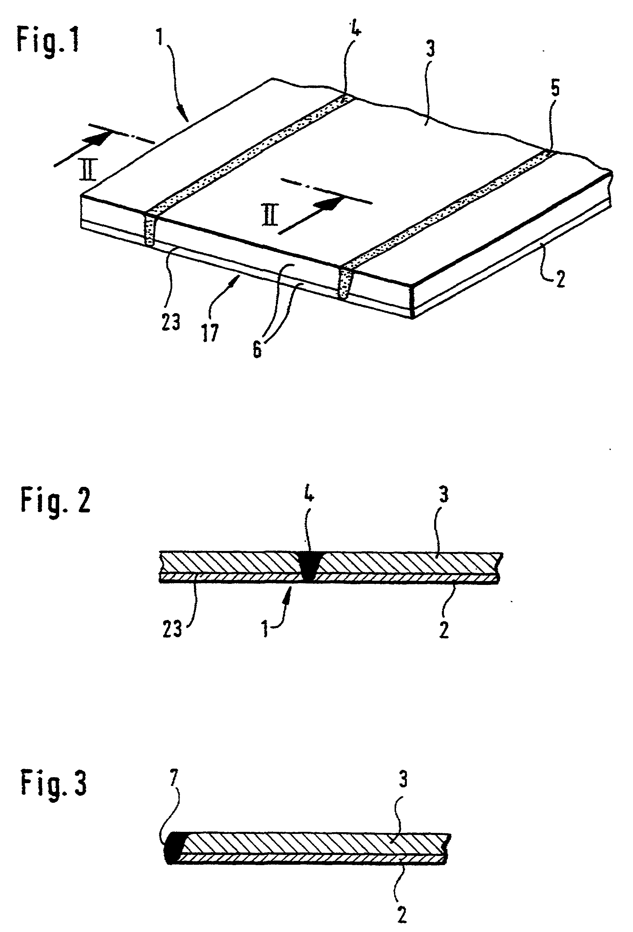

In Fig. 1 ist ein Platinenverbund 1 dargestellt, der aus einer unteren Metallblechplatine 2 und einer oberen Metallblechplatine 3 besteht. Die obere Platine 3 weist eine dickere Wandstärke als die untere Platine auf und kann aus einem duktileren Material als die untere Platine 2 bestehen. Beide Platinen 2 und 3 sind eben ausgebildet und liegen flächig aufeinander. Die Platinen 2 und 3 sind mittels eines Strahlschweißverfahrens, beispielsweise mittels Laserstrahlschweißens oder Elektronenstrahlschweißens miteinander derart verschweißt, daß die obere Platine 3, wie auch in Fig. 2 zu sehen ist, durchgeschweißt ist. Das Schweißen wird so ausgeführt, daß zwei voneinander beabstandete parallele und in ihrer Breitenerstreckung sehr schmale Längsnähte 4 und 5 entstehen, die beiderseits an den Abschlußkanten 6 der Platinen 2 und 3 enden. Die Längsnähte 4 und 5 sind aufgrund des Strahlschweißens qualitativ hochwertig, fluidhochdruckdicht und sehr stark mechanisch, insbesondere auf Zug belastbar ohne daß ein Versagen eintritt. Die Platinen 2 und 3 können auch vor dem Zusammenschweißen schon so vorgeformt sein, daß sie etwa mittig zwischen den Schweißnähten 4 und 5 in einem breiten Spalt auseinanderklaffen, was zum einen für den späteren Aufweitvorgang eine Erniedrigung des Umformgrades mitsichbringt und zum anderen die Einleitung des Druckfluides in den Spalt zur Innenhochdruck-Aufweitung erleichtert.

Der Platinenverbund 1 wird nun in den Schweißnähten 4 und 5 mittels eines Strahlschneideverfahrens, vorzugsweise mittels Laserstrahlschweißen besäumt, wobei das Strahlschneideverfahren aufgrund der Schmalheit der Längsnähte 4 und 5 verwendet wird. Dadurch werden die Schweißnähte 4 und 5 so durchgetrennt, daß der gemäß Fig. 3 entstehende Besäumungsrand 7 einen überhälftigen Teil der jeweiligen Naht 4 und 5 trägt, wobei die Platinen 2 und 3 immer noch ohne Haltbarkeitsverlust vollständig miteinander verschweißt bleiben. Der Schneidevorgang geht derart vonstatten, daß der Besäumungsrand 7 durch Anschmelzen verrundet wird.

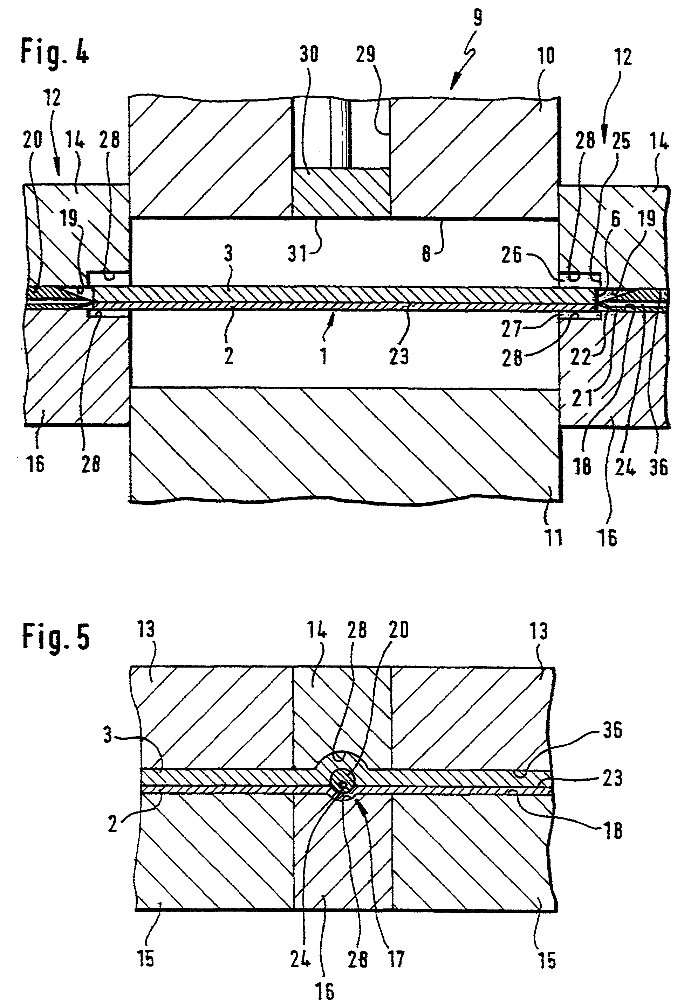

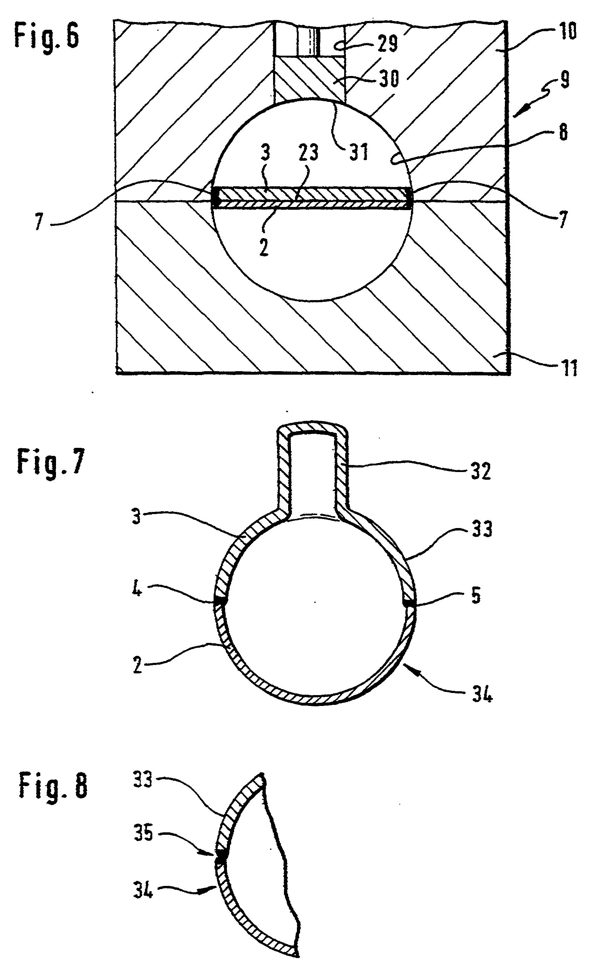

Anschließend wird der Platinenverbund 1 gemäß der Fig. 4-6 in die Gravur 8 eines Innenhochdruck-Umformwerkzeuges 9 eingebracht, das aus einem Oberwerkzeug 10 und einem Unterwerkzeug 11 besteht. Der Platinenverbund 1 durchsetzt die mit kreisrundem Querschnitt versehene Gravur 8 axial etwa mittig, wobei aufgrund der vor dem Aufweitprozß erfolgenden Besäumung in der Schweißnaht 4 und 5 die Besäumungsränder 7 innerhalb der Gravur 8 zu liegen kommen (Fig. 6). Die Trennebene des Umformwerkzeuges 9 ist dabei koplanar mit der Trennfuge 23 der Platinen 2 und 3 angeordnet.

Im Bereich der beiden Abschlußkanten 6 wird der Platinenverbund 1 in einem Einspannwerkzeug 12 eingespannt, das am Umformwerkzeug 9 fluidhochdruckdicht anliegt (Fig. 4). Das Einspannwerkzeug 12 beinhaltet obere Klemmbacken 13 und 14 und untere Klemmbacken 15 und 16, wobei die Klemmbacken 14 und 16 den Druckeinleitungsbereich 17 des Platinenverbundes 1 umgreifen, während die Klemmbacken 13 und 15 im seitlichen Anschluß an die Klemmbacken 14 und 16 den Platinenverbund 1 einspannen (Fig. 5). In die einander zugewandten Trennflächen 36 und 18 der Klemmbacken 14 und 16 sind Langnuten lagegleich eingearbeitet, die im Einspannzustand miteinander eine Durchführung 19 ausbilden, in der eine Drucklanze 20 verschiebbar geführt ist.

Die Drucklanze 20 ist an ihrem gravurzugewandten Ende 21 meißelförmig ausgebildet, wobei die Spitze 22 des Meißels in der Trennebene der Platinen 2 und 3 liegend auf die Trennfuge 23 der Platinen 2 und 3 gerichtet ist. In der Drucklanze 20 verläuft ein Druckfluidkanal 24, der einerseits in der Spitze 22 ausmündet und andererseits mit einer Fluidhochdruck-Erzeugungsanlage verbunden ist. Die Durchführung 19 erweitert sich zur Gravur 8 hin in einer Stufe 25 mit kreissegmentförmigem Querschnitt, wobei die Stufe 25 und somit der dabei entstehende obere Spalt 26 und untere Spalt 27 zwischen der Platine 2 bzw. 3 und der dortigen Durchführungswandung 28 in ihrer Breite höchstens gleich der Wandungsstärke der jeweils spaltbegrenzenden Platine 2,3 bemessen sind.

Von der Gravur 8 geht ein Abzweig 29 ab, in dem ein stempelartiger Gegenhalter 30 verschiebbar geführt ist. Die obere, dikkere Platine 3 ist diesem Abzweig 29 zugewandt, wobei die Anordnung des Platinenverbundes 1 im Umformwerkzeug dahingehend abgestimmt ist, daß die Schweißnähte 4 und 5 außerhalb des Bereiches des Abzweiges 29 liegen. Dies ist vorteilhaft für die spätere Aufweitung, da die Schweißnähte 4 und 5 nach Anlage des Platinenmaterials an der Gravur 8 für die Ausdomung der Platine 3 in den Abzweig 29 hinein keine nennenswerten Belastungen aushalten müssen, was der Prozeßsicherheit des Aufweitverfahrens und insgesamt damit der Herstellung eines Hohlkörpers mit einem domartigen Nebenformelement 32 zuträglich ist.

Nach dem Einspannen des Platinenverbundes 1 wird die Drucklanze 20 auf die Trennfuge 23 der Platinen 2 und 3 verfahren (Fig. 4) und dann mit hoher Kraft in diese hineingerammt, wodurch das dort beaufschlagte Platinenmaterial in den Spalt 26 und 27 verdrängt wird (Fig. 5). Die Drucklanze 20 ist damit am Platinenverbund 1 hochdruckdicht angedockt. Über den Kanal 24 der Drucklanze 20 wird alsdann ein Druckfluid mit Hochdruck zwischen die Platinen 2 und 3 geleitet, wodurch diese sich radial aufweiten und an der Gravur 8 konturgerecht anlegen. Während dieses Aufweitvorganges schließt der Gegenhalter 30 mit seiner Stirnseite 31 entsprechend seiner Stellung in der Einspannphase gemäß Fig. 6 bündig mit der Gravurkontur ab.

Durch die Verrundung der Besäumungsränder 7 des Platinenverbundes 1 werden die Schweißnähte 4 und 5 nicht durchgebogen, so daß ein knickbedingter Riß der Nähte 4 und 5 nicht auftreten kann. Des weiteren ergibt sich durch die Verrundung eine sanfte Anlage an der Gravur 8 des Umformwerkzeuges 9, so daß keine Einkerbung in der Gravur 8 durch eine Scharfkantigkeit der Besäumungsränder 7 entstehen kann, wodurch die Standzeit des Werkzeuges 9 erhöht wird. Bei gemäßigtem Umformdruck ergeben sich durch die Verkippung der Besäumungsränder 7 infolge der Aufweitung an der Außenkontur 33 des entstandenen Hohlkörpers 34 im Schweißnahtbereich Einfallstellen 35, wie Fig. 8 entnehmbar ist. Diese Einfallstellen 35, die gegebenenfalls die Gleichmäßigkeit der gewünschten Außenkontur beeinträchtigen und damit eventuell einen Nacharbeitsgang durch Verputzen erfordern, können in einfacher Weise durch Kalibrieren des Hohlkörpers 34 bei erhöhtem Umformdruck eingeebnet bzw. ausgefüllt werden, so daß ein Hohlkörper 34 hergestellt werden kann, wie er aus Fig. 7 ersichtlich ist.

Nach Anlage der Platinen 2 und 3 an der Gravur 8 weicht der Gegenhalter 30 kontrolliert nach außen aus, wodurch sich ein domartiges Nebenformelement 32 ausformt (Fig. 7). Um die Herstellung von Nebenformelementen 32 größerer Höhe prozeßsicher zu ermöglichen, ist die dem Abzweig 29 zugewandte obere Platine 3 mit entsprechend dicker Wandstärke ausgebildet, so daß genügend Platinenmaterial für die Ausdomung zur Verfügung steht ohne daß eine zum Bersten des Hohlkörpers 34 führende Ausdünnung des Materials des Nebenformelementes 32 auftreten kann. Anstatt einer geeigneten Auslegung der Wandstärke der Platine 3 ist auch die Ausbildung der Platine 3 - bei gleicher Wandstärke wie die Platine 2 - aus einem duktileren Werkstoff denkbar als die untere Platine 2, an welche in diesem Ausführungsbeispiel hinsichtlich ihrer Dicke und Duktilität aufgrund der für ihren Ausformbereich in der unteren Hälfte der Gravur 8 vergleichsweise niedrigeren Umformgrade geringere Anforderungen angestellt werden. Klarerweise können die höchsten Umformgrade prozeßsicher mit einer dicken Platine 3 hoher Duktilität erreicht werden.

Alternativ ist hierzu der Einsatz von "tailored blanks" in günstiger Weise denkbar, wobei die Platine 3 aus drei miteinander verschweißten Blechen besteht, von denen das mittlere Blech die für einen hohen Umformgrad erforderliche erhöhte Dicke und/oder gesteigerte Duktilität aufweist und im Bereich des Abzweiges 29 innerhalb der Gravur 8 angeordnet ist. Dabei sollten jedoch auch diese Schweißnähte zur Verringerung der mechanischen Zugbelastung für eine Gewährleistung der Prozeßsicherheit außerhalb der Bereiches des Abzweiges 29 liegen. Mittels der Verwendung der "tailored blanks" ist die Platine 3 auf die Stelle hohen Umformgrades maßgeschneidert in Dicke, Werkstoffart und Lage gezielt optimal abstimmbar, wobei das für die prozeßsichere Umformung mit höheren Umformgraden bestimmte Blech in seinen Abmessungen lokal auf den Abzweigbereich begrenzt ist. Damit ist ein intelligenter Leichtbau prozeßsicher möglich, bei dem die Bereiche geringeren Umformgrades aus Leichtmetallblechen, die wie ein Aluminiumlegierungsblech im wesentlichen nur eine geringe Bruchdehnung aufweisen, hergestellt werden, wohingegen lediglich für den Bereich der Ausdomung, also des Bereiches mit höheren Umformgraden ein Blech aus duktilem Stahl, beispielsweise St14 verwendet wird.

Dies kann im Karosseriebau von Kraftfahrzeugen bei einem Hohlprofil-Längsträger eingesetzt werden, der aus einer Aluminiumlegierung oder einer Magnesiumlegierung besteht und der mit der A-,B- und C-Säule des Karosserierahmens über einen Rahmenknoten verbunden ist. Dieser Rahmenknoten ist hierbei durch seine einstückige Verbindung mit dem Längsträger ein integraler Bestandteil dessen, wobei zur sinnvollen Befestigung, beispielsweise durch Ankleben oder Anschweißen der jeweiligen Säule am Längsträger der Abzweig des Rahmenknotens bzw. die von der Längserstreckung des Längsträgers radial abgehende Ausdomung möglichst weit ausgezogen sein muß. Dies ist dann mit einem Blech aus entsprechend duktilem Stahl, als Teilstück der gesamten aus mehreren Blechen zusammengeschweißten Platine 3 des Platinenverbundes 1 in diesem Bereich prozeßsicher möglich. Des weiteren sind mit dem Verfahren auch Innenkonturen am Hohlkörper 34 herstellbar, wobei die Gravur 8 dazu entsprechend konturierte Erhebungen oder im Umformwerkzeug 9 geführte in die Gravur 8 hinein verschiebbare Stempel entsprechend ausgebildeter Stirnseite aufweist, die sich in das sich aufweitende Platinenmaterial hineindrücken.

Weiterhin ist es denkbar, daß die Nahtschweißung der beiden Platinen 2 und 3 in einer geschlossenen Kurve erfolgt, wobei in der nachfolgenden Besäumung am verschweißten Platinenverbund 1 auf einem Abschnitt die Schweißnaht unter Freilegung der Trennfuge 23 der Platinen 2,3 abgeschnitten wird, welcher den Bereich 17 der Druckfluideinleitung zur späteren Ausformung bildet. Auf diese Weise sind bauchige flanschlose Hohlkörper mit nur einer Mündungsöffnung prozeßsicher herstellbar, wobei die Einspannung im Bereich der Druckfluideinleitung nur einseitig ist. Ebenfalls ist denkbar, daß die Nahtschweißung von der Abschlußkante 6 des Platinenverbundes 1 ausgeht, in einer durchgehenden gebogenen Kurve verläuft und wieder an der Abschlußkante 6 jedoch von der Ausgangsstelle beabstandet endet, wodurch der oben genannte Arbeitsschritt des Abschneidens eines Teiles der Schweißnaht eingespart wird. Zwischen der Ausgangsstelle und der Endstelle der Schweißnaht befindet sich an der Abschlußkante dann der Bereich 17 der Druckeinleitung.

## Patentansprüche

1. Verfahren zum Herstellen eines Hohlkörpers aus zwei flächig aufeinanderliegenden Metallplatinen (2, 3), welche innerhalb eines Innenhochdruck-Umformwerkzeuges (9) in dessen Schließzustand durch Einleiten eines unter Hochdruck stehenden Druckfluides in die zwischen den Platinen bestehende Trennfuge (23) bis zur Anlage an der die Endform des Hohlkörpers vorgebenden Gravurkontur (8) des Umformwerkzeuges unter Bildung des Hohlkörpers aufgeweitet werden, wobei die Platinen (2, 3) miteinander durch Strahlschweißen in einer Durchschweißung verschweißt werden und wobei der so entstandene Platinenverbund durch einen Schneidevorgang besäumt und der Druckfluideinleitungsbereich des Platinenverbundes nach der erfolgten Aufweitung abgetrennt wird,
**dadurch gekennzeichnet,**
daß die Platinen (2,3) vor dem Einbringen in das Umformwerkzeug (9) nahtverschweißt werden und der daraus hervorgehende Platinenverbund (1) anschließend mittels eines Strahlschneideverfahrens in der Schweißnaht (4,5) besäumt wird, und daß danach der Platinenverbund (1) zur aufweitenden Umformung derart in das Umformwerkzeug (9) eingebracht wird, daß dessen einen Teil der Durchschweißungsnaht (4,5) tragenden Besäumungsränder (7) innerhalb der Gravur (8) des Umformwerkzeuges (9) liegen, wobei der Platinenverbund (1) allein im Bereich (17) der Druckfluideinleitung eingespannt wird.

2. Verfahren nach Anspruch 1,
**dadurch gekennzeichnet**,
daß die Besäumung durch Laserschneiden erfolgt, wobei der Besäumungsrand (7) beim Schneiden durch Anschmelzen verrundet wird.

3. Verfahren nach Anspruch 1,
**dadurch gekennzeichnet,**
daß der Hohlkörper (34) bei einem gegenüber dem Aufweiten erhöhten Fluiddruck kalibriert wird.

4. Verfahren nach Anspruch 1,
**dadurch gekennzeichnet**,
daß bei der Herstellung eines länglichen Hohlkörpers (34) mit einem Nebenformelement (32) die Platinen (2,3) derart in das entsprechend ausgebildete Umformwerkzeug (9) eingebracht werden, daß die Schweißnaht (4,5) der miteinander verschweißten Platinen (2,3) außerhalb des mit dem zu erzeugenden Nebenformelement (32) korrespondierenden Abzweiges (29) der Gravur (8) des Umformwerkzeuges (9) liegt.

5. Verfahren nach Anspruch 1,
**dadurch gekennzeichnet**,
daß vor der Herstellung eines länglichen Hohlkörpers (34) mit einem Nebenformelement (32) mehrere Metallbleche gleichen Werkstoffes, jedoch unterschiedlicher Dicke miteinander zu einer Platine (3) verschweißt werden, welche eine der Platinen (2,3) bildet, aus denen der Hohlkörper (34) hergestellt wird, und daß diese Platine (3) beim Einbringen des Platinenverbundes (1) in das Umformwerkzeug (9) mit dem Teil größerer Dicke dem Bereich des mit dem Nebenformelement (32) korrespondierenden Abzweiges (29) der Gravur (8) des Umformwerkzeuges (9) gegenüberliegend angeordnet wird, derart, daß die Schweißnähte der Metallbleche außerhalb des Abzweiges (29) liegen.

6. Verfahren nach Anspruch 1,
**dadurch gekennzeichnet**,
daß vor der Herstellung eines länglichen Hohlkörpers (34) mit einem Nebenformelement (32) mehrere Metallbleche, die aus unterschiedlich duktilen Werkstoffen bestehen, miteinander zu einer Platine (3) verschweißt werden, welche eine der Platinen (2,3) bildet, aus denen der Hohlkörper (34) hergestellt wird, und daß diese Platine (3) beim Einbringen des Platinenverbundes (1) in das Umformwerkzeug (9) mit dem aus duktilerem Werkstoff bestehenden Teil dem Bereich des mit dem Nebenformelement (32) korrespondierenden Abzweiges (29) der Gravur (8) des Umformwerkzeuges (9) gegenüberliegend angeordnet wird, derart, daß die Schweißnähte der Metallbleche außerhalb des Abzweiges (29) liegen.

7. Verfahren nach Anspruch 1,
**dadurch gekennzeichnet,**
daß durch die Nahtschweißung zwei parallel verlaufende Schweißnähte (4,5) erzeugt werden, die an Abschlußkanten (6) der Platinen (2,3) enden, wobei zur Ausformung zwischen den Schweißnähten (4,5) in die unverschweißte Trennfuge (23) der Platinen (2,3) das Druckfluid eingeleitet wird.

8. Verfahren nach Anspruch 1,
**dadurch gekennzeichnet,**
daß die Nahtschweißung in einer geschlossenen Kurve erfolgt, wobei in der nachfolgenden Besäumung am verschweißten Platinenverbund (1) auf einem Abschnitt die Schweißnaht unter Freilegung der Trennfuge (23) der Platinen (2,3) abgeschnitten wird, welcher den Bereich (17) der Druckfluideinleitung zur späteren Ausformung bildet.

## Claims

1. A method of producing a hollow body from two metal blanks (2, 3) laid flat one on top of the other, which, in order to form the hollow body, being placed inside an internal-high-pressure forming tool (9) and in the closed state thereof, are expanded, by introducing a pressurised fluid at high pressure into the dividing join (23) existing between the blanks, until they are in contact with the sink contour (8) of the forming tool determining the final shape of the hollow body, the blanks (2, 3) being welded to one another in a through-weld by beam welding, and the resultant blank unit being trimmed by means of a cutting process and the pressurised fluid inlet region of the blank unit being cut off after expansion,
**characterised in that**
prior to being inserted in the forming tool (9), the blanks (2, 3) are seam-welded and the resultant blank unit (1) is then trimmed in the weld seam (4, 5) by means of a beam cutting process and the blank unit (1) is then inserted in the forming tool (9) in readiness for the expansion-forming process in such a way that a part of the through-weld seam (4, 5) thereof bearing trimmed edges (7) lies inside the sink (8) of the forming tool (9), the blank unit (1) being clamped only in the region (17) of the pressurised fluid inlet.

2. Method as claimed in claim 1,
**characterised in that**
the trimming is performed by laser-cutting, the trimmed edge (7) being rounded by fusion during cutting.

3. Method as claimed in claim 1,
**characterised in that**
the hollow body (34) is calibrated at a fluid pressure higher than that of the expansion.

4. Method as claimed in claim 1,
**characterised in that**
to produce a longitudinal hollow body (34) with a secondary formed element (32), the blanks (2, 3) are inserted in the appropriately configured forming tool (9) in such a way that the weld seam (4, 5) by which the blanks (2, 3) are welded to one another lies outside the branch (29) of the sink (8) of the forming tool (9) corresponding to the secondary formed element (32) to be produced.

5. Method as claimed in claim 1,
**characterised in that**
prior to producing a longitudinal hollow body (34) with a secondary formed element (32), several metal sheets of a same material but of differing thicknesses are welded to one another to form a blank (3) forming one of the blanks (2, 3) from which the hollow body (34) will be produced, and when the blank unit (1) is placed in the forming tool (9), this blank (3) is disposed with the part having a greater thickness lying opposite the region of the branch (29) of the sink (8) of the forming tool (9) having the corresponding secondary shaped element (32) in such a way that the weld seams of the metal sheets lie outside the branch (29).

6. Method as claimed in claim 1,
**characterised in that**
prior to making a longitudinal hollow body (34) with a secondary shaped element (32), several metal sheets of materials of differing ductility are welded to one another to form a blank (3) forming one of the blanks (2, 3) from which the hollow body (34) will be produced, and when the blank unit (1) is inserted in the forming tool (9), this blank (3) is disposed with the part consisting of the more ductile material lying opposite the region of the branch (29) of the sink (8) of the forming tool (9) corresponding to the secondary formed element (32) in such a way that the weld seams of the metal sheets lie outside the branch (29).

7. Method as claimed in claim 1,
**characterised in that**
two weld seams (4, 5) extending parallel and terminating at terminal edges (6) of the blanks (2, 3) are produced by seam-welding, the pressurised fluid being introduced into the non-welded dividing join (23) of the blanks (2, 3) between the weld seams (4, 5) for expansion forming purposes.

8. Method as claimed in claim 1,
**characterised in that**
the seam welding is performed in a closed curve, the weld seam being cut off, during subsequent trimming of the welded blank unit (1), at one portion to leave open the dividing join (23) of the blanks (2, 3), which forms the region (17) of the pressurised fluid inlet for the subsequent expansion forming process.

## Revendications

1. Procédé de fabrication d'un corps creux à partir de deux platines métalliques (2, 3) appliquées l'une sur l'autre sur toute la surface, qui sont déployées avec formation du corps creux, à l'intérieur d'un outil de reformage sous haute-pression intérieure (9), pendant qu'il est à son état fermé, par introduction d'un fluide à pression, placé sous haute-pression, dans le joint de séparation (23) constitué entre les platines, jusqu'à provoquer la mise en appui sur de contour de gravure (8), prédéterminant la forme finale du corps creux, de l'outil de reformage, les platines (2, 3) étant soudées ensemble par soudage par rayonnement, et le composite de platine ainsi constitué étant rogné par un processus de découpage, et la zone d'introduction de fluide sous pression du composite de platine étant séparée, une fois le déploiement effectué,
caractérisé en ce que
les platines (2, 3), avant introduction dans l'outil de reformage (5), sont soudées avec formation d'un joint continu, et le platine de composite (11) ainsi produit étant ensuite rogné au niveau du cordon de soudure (4, 5) au moyen d'un procédé de découpage à jet, et en ce que, ensuite, le composite de platine (1) est introduit, pour procéder au reformage de déploiement, dans l'outil de reformage (9), de manière que ses bords de rognage (7), portant une partie du cordon de soudage continu (4, 5), soient placés à l'intérieur de la gravure (8) de l'outil de reformage (9), le composite de platine (1) seul étant enserré dans la zone (17) de la conduite d'introduction de fluide à pression.

2. Procédé selon la revendication 1, caractérisé en ce que le rognage s'effectue par découpage au laser, le bord de rognage (7) étant arrondi par mise en fusion, lors du processus de découpage.

3. Procédé selon la revendication 1, caractérisé en ce que le corps creux (34) est calibré en utilisant une pression de fluide augmentée par rapport à celle utilisée pour le déploiement.

4. Procédé selon la revendication 1, caractérisé en ce que, lors de la fabrication d'un corps (34) allongé, muni d'un élément de forme annexe (32), les platines sont introduites dans l'outil de reformage (9) de configuration correspondante, de manière que le cordon de soudure (4, 5) des platines (2, 3) soudées ensemble soit placé à l'extérieur de la ramification (29), correspondant à l'élément de forme annexe (32) à générer, de la gravure (8) de l'outil de reformage (9).

5. Procédé selon la revendication 1, caractérisé en ce que, avant la fabrication d'un corps creux (34) allongé, muni d'un élément de forme annexe (32), plusieurs tôles métalliques, du même matériau mais cependant d'épaisseur différente, sont soudées ensemble pour constituer une platine (3), qui constitue l'une des platines (2, 3) d'où le corps creux (34) est fabriqué, et en ce que cette platine (3), lors de l'introduction du composite de platine (1) dans l'outil de reformage (9), est disposée en plaçant la partie de plus grande épaisseur en regard de la zone de la ramification (22) correspondant à l'élément à l'élément à forme annexe (32), de la gravure (8) de l'outil de reformage (9) de manière que les cordons de soudure des tôles métalliques soient placés à l'extérieur de la ramification (29).

6. Procédé selon la revendication 1, caractérisé en ce qu'avant la fabrication d'un corps creux (34) allongé muni d'un élément à forme annexe (32), plusieurs tôles métalliques, constituées de matériaux de ductilités différentes, sont soudées ensemble pour former une platine (3), qui constitue l'une des platines (2, 3) d'où le corps creux (34) est fabriqué, et en ce que cette platine (3), lors de l'introduction du composite de platine (1) dans l'outil de reformage (9), est disposée avec la partie constituée du matériau le plus ductile, en regard de la zone de la ramification (29), 'correspondant à l'élément de forme annexe (32), de la gravure (8) de l'outil de reformage (9), de manière que les cordons de soudure des tôles métalliques soient placés à l'extérieur de la ramification (29).

7. Procédé selon la revendication 1, caractérisé en ce que, au moyen du soudage à cordon continu, sont générés deux cordons de soudage (4, 5) parallèle, s'achevant au niveau d'arêtes de délimitation (6) des platines (2, 3), le fluide sous pression étant introduit dans le joint de séparation (23) non soudé de la platine (2, 3) entre les cordons de soudure (4, 5), pour opérer le formage.

8. Procédé selon la revendication 1, caractérisé en ce que le soudage à cordon continu est effectué suivant un tracé en courbe fermé, sachant que, lors du processus de rognage subséquent opéré sur le composite de platine (1) soudé, le cordon de soudure est découpé, en dégageant le joint de séparation (23) des platines (2, 3), sur un tronçon qui constitue la zone (17) d'introduction de fluide à pression pour opérer le formage ultérieur.
